# EUROPEAN PATENT SPECIFICATION

(11) **EP 2 687 440 B1**
(45) Date of publication and mention of the grant of the patent: **11.10.2017**
(21) Application number: 12005235.2
(22) Date of filing: 16.07.2012
(51) Int. Cl.: B64C 27/00

(54) **Apparatus and method for reducing, avoiding or eliminating lateral vibrations of a helicopter**
Vorrichtung und Verfahren zur Verringerung, Vermeidung oder Beseitigung von seitlichen Vibrationen eines Helikopters
Appareil et procédé pour réduire, éviter ou éliminer les vibrations latérales d'un hélicoptère

(43) Date of publication of application: 22.01.2014
(73) Proprietor: Airbus Defence and Space GmbH, 85521 Ottobrunn (DE); AIRBUS HELICOPTERS DEUTSCHLAND GmbH, 86609 Donauwörth (DE)
(72) Inventor: Klöppel, Valentin, 81827 München (DE); Jänker, Peter, 85521 Riemerling (DE); Konstanzer, Peter, 85521 Riemerling (DE); Dieterich, Olivier, 82237 Wörthsee (DE)
(74) Representative: Kastel, Stefan

(56) References cited:
- GB-A- 2 149 473
- US-A1- 2004 030 664
- US-A1- 2008 173 754
- US-A1- 2009 321 555
- MCHUGH F J ET AL: "HELICOPTER VIBRATION REDUCTION WITH HIGHER HARMONIC BLADE PITCH", PROCEEDINGS OF THE EUROPEAN ROTORCRAFT AND POWERED LIFT AIRCRAFT FORUM AIX EN PROVENCE, SEPT. 7 - 9, 1977; [PROCEEDINGS OF THE EUROPEAN ROTORCRAFT AND POWERED LIFT AIRCRAFT FORUM], ARLES, AAAF, FR, vol. FORUM 3, 7 September 1977 (1977-09-07), pages 22.0-22.12, XP000222064,

## Description

The invention relates to an apparatus and a method for damping, reducing, avoiding, compensating, or eliminating tail shake of a helicopter.

The follow-up movement of turbulences induced by helicopter rotor hubs as well as by parts of a mast or engine cowling produces lateral dynamical forces on the vertical tail fin, elevator elements or elevator end plates and/or at the tail rotor of a helicopter. Those lateral dynamical forces can lead to low-frequency vibrations in certain flying ranges and, hence, to transverse acceleration in a cockpit or cabin area, the so-called tail shake.

In helicopters practically available on the market, the tail shake is reduced just by structural or design amendments. Such design or structural amendments relate to a so-called rotor hub fairing ("Hub Cap"), streamlined mast cowling, more or less heuristic geometric amendments of the engine cowling, and so on. In practically available products, especially of the Eurocopter Group, use of mass forces generated by controlled eccentrics is tested (e.g. product NH90, System TSAR).

Pilots sense tail shake as strong disturbance impeding their control tasks. Hence, tail shake is considered as inacceptable. Tail shake reduces the comfort for crew and passengers and complicates on board treatments of patients by doctors and paramedics during medical transports. In military use, tail shake complicates operating of weapon systems and exact shooting. Up to now, the tail shake phenomenon is not fully explored. Tail shake can already be caused by a small change of design vis-à-vis conventional helicopter constructions having no tail shake. When during development of a new helicopter - often already after a small changing of the outer top surface outline - tail shake is noticed, a time and cost consuming search has to be started for a solution in form of a heuristic approach.

At the present, many research institutes are exploring a rotor air flow fuselage interaction for investigating non-static flow areas at the helicopter which are generated by interacting of the rotor air flow with the flexible fuselage structure. This could lead to undesirable aero-elastic effects and vibrations. Especially the tail shake phenomenon is still occurring in many early flight tests and - up to now - this is dampened by modifications of the prototype only.

The following patent literature discloses several approaches for reducing helicopter vibrations by control applications.

GB 2 149 473 A discloses an actuator system with two actuators in tandem configuration for actuating a collective pitch control of the blades of a helicopter main rotor and for a cyclic pitch control rod for these blades. The actuator system may be used to effect higher harmonic pitch control of helicopter blades to reduce vibration levels which could otherwise be transmitted from the blades to a body of the helicopter. A sensing device in the helicopter body may comprise a plurality of accelerometers and provide signals on lines to a computer which generates signals indicative of the amount of oscillatory movement required from one of the actuators to oppose and effectively damp out vibrations which would otherwise be transmitted from the blades to the body. These oscillatory movement for damping out vibrations are superimposed to a pitch control actuated by a further actuator of the actuator system.

GB 2 149 473 A relates to damping of general vibrations to be transmitted from the blades to the body of a helicopter. There is no disclosure of a tail shake compensation. Further, the known actuator system needs movement of the pitch control of the main rotor.

McHugh F J et al.: "Helicopter vibration reduction with higher harmonic blade pitch", Proceedings of the European rotorcraft and powered lift aircraft forum Aix en Provence, Sept. 7 - 9, 1977; [Proceedings of the European rotorcraft and powered lift aircraft forum], Arles, AAAF, Fr, vol. Forum 3, 7 September 1977 (1977-09-07), pages 22.0-22.12, X0000222064 describes a wind-tunnel test used to evaluate higher harmonic blade pitch for the reduction of helicopter vibration. The investigation focuses on a hingeless rotor. The wind-tunnel test is only conducted with a model rotor installed in a wind tunnel without a body of a helicopter. Effects of higher harmonic blade pitch control to a reduction of vibration induced by the rotor are examined. This wind-tunnel test does not relate to helicopter tail shake and affects the main pitch control of a main rotor of a helicopter.

US 2004/0030664 A1 describes two neural networks used to control adaptively a vibration and noise-producing plant such as a main rotor of a helicopter by active flap control. It relates to reduction of a general noise and vibration of a helicopter main rotor; this document does not disclose any tail shake compensation.

US 2009/0321555 A1 discloses control systems relating generally to the field of aerodynamics and more particularly to the control of vibration of rotor blades such as helicopter blades. The known systems involve devices for vibration control of each rotor blade which incorporate control systems of the flow control type such as actively controlled flap and a structural control type such as an active pitch link. Also disclosed are relating methods of controlling vibration in a rotor blade, wherein the rotor blade is coupled to a rotor hub and has at least a torsional stiffness and a pitch angle associated herewith. This document relates to vibration of a main rotor only and not to tail shake.

US 5,242,130 discloses a method and a device for a reduction of the oscillations of a divergent nature induced in the fuselage of a helicopter wherein the oscillations are detected and control signals are output to control a swash plate in order to counteract against the vibrations. This prior art relates mainly to dampen divergent roll oscillations or pitch oscillations; reducing of tail shake is not disclosed.

US 5,816,533 discloses a method and a device for reducing vibrations generated on the structure of a helicopter by the aerodynamic flow through the main rotor. This prior art especially is directed to the reduction of tail shake. The known device comprises at least one sensor for measuring the vibration and a calculating means for determining an alternating variation in the pitch of the blades of a tail rotor for generating an alternating force opposing said vibration.

From US 5,895,012 a method and a device for reducing vibrations is known, too, wherein, however, the collective pitch of the main rotor blades is controlled to act against the vibration. This may be done, for example, by a swash plate control. Moreover, the vibrations addressed are stemming from the drive train and the blade lead-lag dampers and are therefore by definition no tail shake.

From US 6,279,704 B1, a device and a method for reducing tail shake by control means are known. According to this prior art, a specially provided swing mass or flapping mass connected to the structure by a flexible boom is set into vibration by a controllable actuator in order to dampen vibrations detected by sensors. While such device is considered as effective for dampening tail shake, an additional structural unit is necessary to provide the additional swing mass which could result - depending on the special needs - in a considerable additional weight.

Finally, US 7,461,819 B2 discloses to reduce tail shake by a controlled movement of a tail fin rudder or tail elevator of the helicopter to generate opposing forces. However, only those tail shake effects are addressed, which stem from the lower part of the fuselage, typical for descent flight.

The known methods and apparatuses as discussed above for damping tail shake vibrations generally appear appropriate. However, either additional masses are necessary or main control elements for flight control - such as collective pitch of main rotor blades, pitch of tail rotor blades, tail fin or tail elevator - are employed.

It is an object of the invention to provide an improved apparatus and an improved method for reducing, eliminating or avoiding lateral vibrations of a helicopter.

For accomplishing this object, an apparatus and a method, having the features or steps of the independent claims, are proposed by the invention.

Advantageous embodiments of the invention are subject-matter of the dependent claims.

The invention provides, according to a first embodiment thereof, an apparatus for reducing, eliminating or avoiding tail shake in form of a lateral vibration of a helicopter generated on the structure of the helicopter by the wake of main rotor hub and mast/engine cowling interacting with a tail structure of the helicopter, comprising:
a tail shake detection means for detecting at least one parameter indicative of an excited tail shake (e.g. in case of vibration damping or compensation) and for generating a detection signal representative of said parameter,
a calculating unit configured to generate a command signal on basis of the detection signal wherein the command signal is configured to counteract the tail shake by actuating at least one actuating means in order to:
   i) dampen the tail shake or
   ii) compensate the tail shake or
   iii) to avoid the tail shake, and
at least one actuating means controllable by the command signal, wherein the at least one actuating means is:
   a main rotor rotation speed influencing means for changing the rotation speed of the main rotor.

Preferably, a second actuating means controllable by the command signal is selected from the group of actuating means comprising:an active flap control for controlling flaps arranged at the trailing edges of main rotor blades, and a rotor blade active twisting means for actively controllable twisting of main rotor blades.

Preferably, the tail shake detection means comprises:
a tail shake detection means for detecting at least one parameter indicative of an excited tail shake.

Preferably, the tail shake detection means additionally comprises: a means to detect in the structure of the wake of the rotor hub and mast and/or engine cowling the risk for excitation of such tail shake.

Preferably, an apparatus is provided for reducing or eliminating or avoiding tail shake in form of a lateral vibration of a helicopter generated on the structure of the helicopter by the wake of main rotor hub and mast/engine cowling interacting with the tail structure of the helicopter, comprising:
tail shake detection means for detecting tail shake and for generating a detection signal representative of said detected tail shake movement,
a calculating unit configured to generate a command signal on basis of the detecting signal wherein the command signal is configured to counteract the tail shake by means of at least one actuating means,
and at least one actuating means controllable by said command signals.

One of the at least one actuating means is, according to the invention a main rotor rotation speed influencing means for influencing the rotation speed of the main rotor.

In an embodiment of the invention, a second actuating means of the at least one actuating means is selected from the group of actuating means comprising: an active flap control for controlling flaps arranged at the trailing edges of main rotor blades, or
a main rotor blade active twisting means configured to twist a single main rotor blade in an actively controllable manner.

The invention especially allows tail shake to be defeated without providing additional masses and without intervening in main flight control elements of the helicopter. The control does not influence the main flight control; the main control surfaces can be controlled independent from the tail shake control. Hence, the invention provides a significant improvement in tail shake abatement.

In contrast to the state of art according US 7,461,819 B2, preferred embodiments of the invention have the advantage that specifically those tail shake effects are tackled, which stem from the wake of main rotor hub and mast/engine cowling, typical for forward flight.

Preferably, the main rotor rotational speed influencing means comprises a rotor brake controllable by said calculating unit for braking the main rotor, preferably in a cyclic functioning manner and/or a motor control for altering, preferably in a cyclic manner, a rotational speed of an electric motor used as drive or at least as auxiliary drive for the main rotor.

Preferably, the calculating means is configured to generate counter-force, counter-roll moment or counter-torque command signals for controlling the activating means to generate counter-forces, counter-roll moments or counter-torques opposing the tail shake.

Preferably, the calculating unit is configured to generate the flow influencing command signals so that the wake downstream of main rotor hub and mast/engine cowling is at least locally deflected or redirected.

The invention provides, according to a further aspect thereof, a helicopter having a main rotor and a tail and an apparatus according to an embodiment of the first aspect of the invention.

The invention provides, according to a still further aspect thereof, a method for reducing or eliminating or avoiding tail shake in form of lateral vibrations of a helicopter generated on the structure of the helicopter by the wake of main rotor hub and mast/engine cowling interacting with a tail structure of the helicopter, comprising the steps of:
a) detecting at leastan excited tail shake
b) generating a command signal on basis of the detected tail shake wherein the command signal is configured to control an actuating means in order to counteract the tail shake, and further comprising the step:
c1) influencing or changing the rotation speed of the main rotor on basis of the command signal.

Preferably, the method comprises at least one of the steps:
c2) controlling flaps arranged at trailing edges of main rotor blades by means of the command signal, and/or
c3) twisting of main rotor blades wherein the twisting is controlled by the command signal.

Preferably, a method is provided for reducing or eliminating or avoiding tail shake in form of lateral vibration of a helicopter generated on the structure of the helicopter comprising the steps:
a) detecting such tail shake
b) generating a command signal on basis of the detected tail shake wherein the command signal is configured to counteract the vibration, and further characterized by
the step:
c1) affecting, influencing or changing the rotation speed of the main rotor on basis of the command signals, so as to fight the tail shake.

Preferably, the method comprises at least one of the steps:
c2) actuating flaps arranged at trailing edges of main rotor blades on basis of the command signals, and/or
c3) actively controlled twisting of main rotor blades on basis of the command signals,
so as to fight the tail shake.

Therein, step c1) comprises:
c1a) actuating a rotor brake for cyclically braking the main rotor and/or
c1b) cyclically affecting, influencing or changing the rotation speed of the main rotor drive, especially by an electric motor.

Preferably, step b) comprises:
b1) generating a counter-force, counter roll moment or counter-torque command signal for generating counter-forces, counter roll moments or counter-torque, counter-acting the tail shake for damping or compensating said tail shake and/or
b2) generating flow influencing command signals for influencing the wake of main rotor and mast/engine cowling towards the tail area so as to reduce or avoid a stimulation of oscillatory movements of the tail area.

Preferably, step b2) comprises:
generating the flow influencing command signals such that the wake of main rotor hub and mast/engine cowling is at least locally deflected.

Preferably, the calculating unit comprises a controller. Examples are a classical PID controller, or a disturbance rejection controller (e. g. by a Notch filter) or a controller acting according to the simple flip-flop principle. Combinations to address different control goals simultaneously shall be possible.

According to one aspect, a damping action is performed. For example, the fuselage modes are sensed and parameter describing these fuselage modes, for example their time derivative, is fed back to a controller which provides the damping. Preferably, the controller is a PID controller in this case.

According to another aspect of the invention, the tail shake is compensated. For a compensatory action, forces and/or roll moments or torques are initiated which are acting against identified forces and/or roll moments or torques provoked by the tail shake mechanism. In this case, preferably, the controller is e.g. a disturbance rejection controller.

According to another aspect of the invention, the tail shake is reduced by the steady/dynamic deviation of the wake of rotor hub and mast/engine cowling.

The apparatus according to the invention or its preferred embodiments is preferably configured to conduct the method according to the invention or according to its preferred embodiments.

Preferred exemplary embodiments of the invention are explained in more detail with reference to the accompanying drawings. There is shown in
- Fig. 1: a simplified plan view of an embodiment of a helicopter for explaining the occurrence of tail shake phenomena;
- Fig. 2: a simplified schematic side view of an inventive embodiment of a main rotor speed influencing means that can be used as actuating means of an apparatus for tail shake counteracting;
- Fig. 3: a simplified schematic plan view of a helicopter which is not comprised by the invention for explaining a further example of an actuating means in form of an active flap control for tail shake abatement;
- Fig. 4: a schematic perspective view of a main rotor blade for explanatory purposes only, illustrating a means for actively twisting the main rotor blade as an additional example for an actuation means usable for tail shake abatement;
- Fig. 5: a schematic block diagram illustrating an exemplary structure of an apparatus for damping tail shake vibration;
- Fig. 6: a schematic block diagram illustrating an exemplary structure of an apparatus for tail shake vibration compensation; and
- Fig. 7: a schematic side view of a further embodiment of a helicopter with active flap control to illustrate the reduction/avoidance of tail shake vibration by a steady or dynamic offset of the wake of rotor hub and mast/engine cowling induced by flap-controlled local modifications of the rotor's downstream flow.

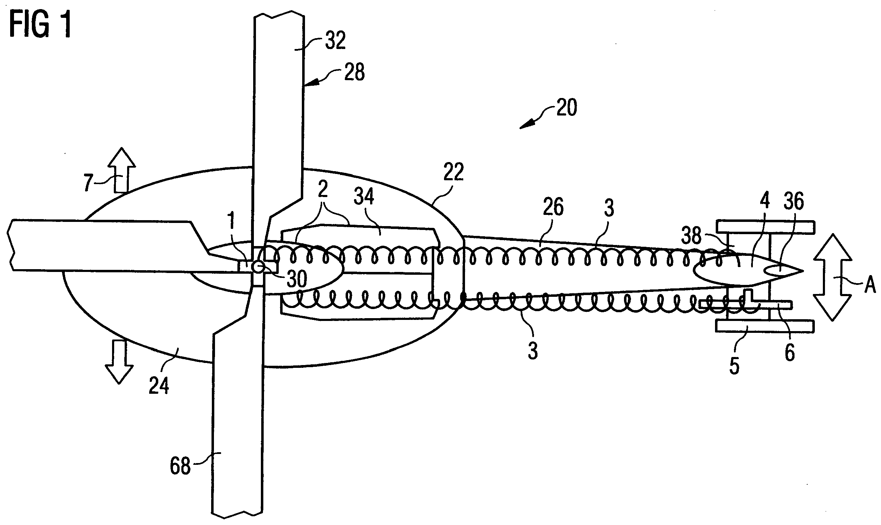

First, the occurrence of so-called tail shake phenomena of a helicopter 20 is explained with reference to Fig. 1. The helicopter 20 includes a fuselage or airframe 22 with a cockpit and a cabin area 24 and a tail boom 26.

A main rotor 28 including a rotor mast 30, a rotor hub 1 and main rotor blades 32 is mounted or arranged at the fuselage or airframe 22. The main rotor 28 is rotatably driven by at least one engine 34.

In an example embodiment, the engine 34 includes an internal combustion engine, e.g. a turbine. In another embodiment, the engine 34 includes at least one electric motor as auxiliary motor or as main drive motor. For further details and explanations of such embodiment, it is explicitly referred to WO 2011/144688 A1 showing and describing such electric motor as a part of a main rotor drive. WO 2011/144688 A1 is incorporated herein by reference.

A vertical tail fin 4, an elevator 38 with end plates 5, and a tail rotor 6 are arranged on the tail boom 26.

The main rotor blades 32 are linked to the rotor mast 30 in a way generally known in the field of helicopters.

At a rotor hub 1 of a helicopter 20 as well as at a rotor mast/ engine cowling 2, the air flow releases vortices forming corresponding downstream flow structures in the wake 3 of the rotor hub and mast/engine cowling.

These vortices interfere with a vertical stabilizer 4, with end plates 5, with the tail rotor 6 and/or with other structures or constructions at the tail boom 26 and generate there lateral dynamical forces in a typical frequency range. The lateral dynamical forces excite the helicopter airframe 22, generating low frequency oscillations or vibrations during certain flight conditions, since the corresponding modes of the airframe undergo only low dampening. This can lead to significant transversal or lateral accelerations 7 in the cockpit and cabin area 24. In the field of aviation, this phenomenon is called "tail shake".

This phenomenon is sensed as randomly occurring lateral impulses. Since the occurrence of this disturbance cannot be predicted, control tasks of the pilot are made difficult, and this disturbance should be avoided as far as possible.

Furthermore, tail shake affects travelling comfort and complicates onboard treatments of patients by doctors and paramedics during medical transports. In military use, tail shake aggravates exact shooting.

At the present, occurrence of tail shake cannot be predicted. This phenomenon often occurs in new developments, but also as a consequence of structural changes of existing models influencing the outer contour of the helicopter airframe 22 in the middle portion and/or the back portion.

As a result, a time and cost consuming research for tail shake abatement is necessary in many new developments, e.g. by arranging a cap onto the rotor hub (so-called hub cap) as well as designing a more streamlined cowling 2 of the mast (pylon) and of the engines. Elaborate flight test have to be conducted to check the result and success of this try and error approach.

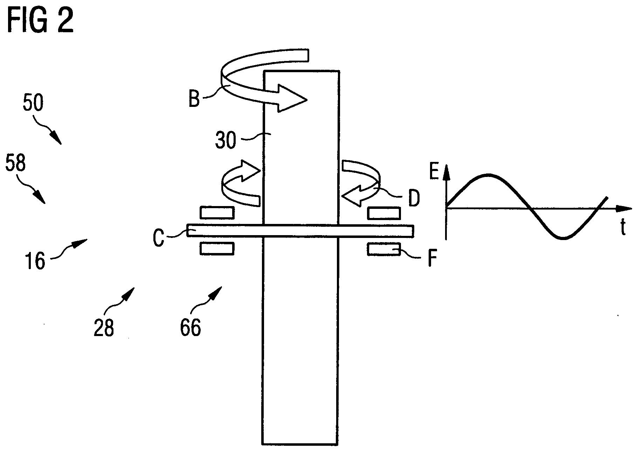

To solve this problem, an apparatus 50 for reducing or avoiding tail shake, i.e. lateral vibrations of the helicopter 20 as well as a method for reducing or avoiding such tail shake - which method can be conducted by such apparatus - is proposed. The apparatus 50 and the method are explained in more detail below with reference to Fig. 2 to 7.

Especially, either a controlled tail shake vibration damping of the corresponding frequency modes or a controlled generation of forces and torques or roll moments for defeating such tail shake vibrations are proposed.

Tail shake vibrations are damped or compensated - especially via generation of counter-forces, counter-roll moments and counter-torques - by the apparatus 50. For enabling this, the apparatus includes a tail shake and/or tail shake potential detection means 51, a calculating unit 54, and an actuating means 16.

Preferably, the tail shake and/or tail shake potential detection means 51 includes a tail shake detection means 52 and/or an excitation risk detection means 53.

Preferably, the apparatus 50 and the method that can be conducted therewith provide a closed loop control for defeating the lateral vibrations, especially tail shake vibrations.

Especially, an abatement shall be achieved in a closed loop control preferably by an active rotor control by means of servo-flaps 10 at the blade trailing edge 68 of main rotor blades 32 and/or by means of a modulation of the rotor rotation frequency.

In one embodiment of the apparatus 50 according to the invention as indicated in Fig. 2, an actuating means 16 comprises a main rotor rotation speed influencing means 58 for changing the rotation speed of the main rotor 28.

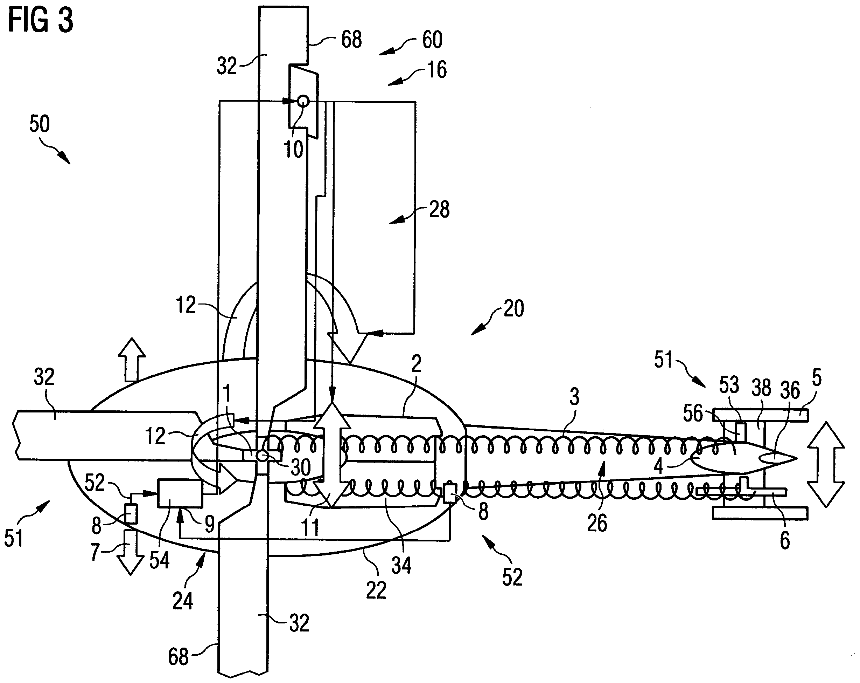

As indicated in Fig. 3, the actuation means 16 could also comprise an active flap control 60 for controlling flaps 10 arranged at the trailing edges 68 of the main rotor blades 32.

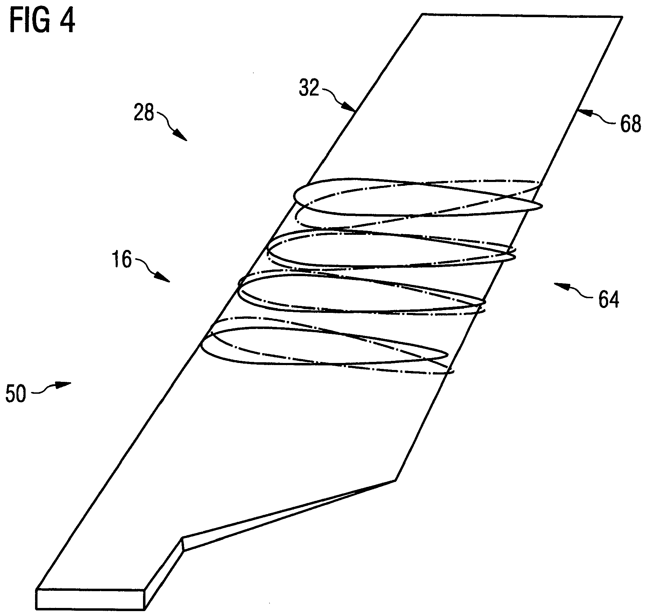

Alternatively or additionally, an actuating means 16 could comprise a rotor blade twisting means 64 for actively controlled twisting of main rotor blades 32, as this is shown in Fig. 4.

The different possible actuating means 16, 58, 60, 64 are explained in more detail below with reference to Fig. 2 to 4.

According to the invention, a damping or compensating of the tail shake vibrations is achieved, preferably in closed loop control, by modulation of the rotational frequency of the main rotor 28. To comply with this, a main rotor rotation speed influencing means 58 is provided, one embodiment of which is shown in Fig. 2.

Fig. 2 shows the rotor mast 30 and a rotor brake 66.

With a rotor brake 66, a controlled, cyclic braking of the rotor 28 can be achieved. In case of an electrically driven rotor, such as described, for example, in WO 2011/144688 A1, a variation of the rotational frequency or a variation of the rotational torque is achievable by control of the electric motor.

Additionally, a cyclically controlled tail fin rudder 36 can be used as actuating means 16.

Fig. 3 shows, for explanation only, an example of a helicopter 20 equipped with the apparatus 50 for actively fighting tail shake vibrations, wherein a tail shake damping, reducing/avoiding and/or tail shake compensation is achieved by active flap control 60. Here, a flap 10 moveable by control rules is provided on the trailing edge 28 of one or several or all of the main rotor blades 32. Examples for such flaps 10 are shown and described in US 6 168 379 B and/or FR 2 775 654 B1, both incorporated herein by reference.

In Fig. 3, further an exemplary embodiment of the tail shake detection means 52 is indicated. The tail shake detection means 52 includes especially at least one or several error signal sensors 8, for example acceleration or oscillation speed sensors. The tail shake detection means 52 generally is configured to detect vibrations 7 or oscillations that generate lateral accelerations when air flow disturbance generated by the wake of rotor hub 30, and rotor mast/engine cowling 2 in their downstream flow structures 3 hit a tail fin structure on the tail boom 26.

The spectrum of these flow structures is an indication of tail shake risks and therefore monitored by dedicated sensors 56 which form part of the means 53 to detect the risk of tail shake excitation.

Hence, the tail shake and/or tail shake potential detection means is configured to detect these tail shake vibrations 7 and/or the risk of these tail shake vibrations 7 by means of sensors 8, 56.

Especially when the frequency of such disturbance corresponds to Eigen frequencies of the helicopter structure of the tail boom structure or of the helicopter airframe 22, lateral tail shake vibrations 7 can be excited. Such Eigen frequency generally lie in a range of low frequencies, v.i.z. the single-digit Hertz regime.

The error signal can be delivered by different error signal sensors 8, 56. Preferably, error signal sensors are used that already exist on the helicopter 20. Possible error signals can be provided for example by:
- acceleration sensors as used to reduce vibration by the technology of active flap control 60,
- vibration speed sensors,
- sensors for detecting a mast torque or mast moment; or
- strain gauge sensors, preferably at the root of the tail boom 26, or
- sensors 56 for turbulence parameters to detect turbulences in the wake 3 of rotor hub and mast/engine cowling.

For further details for detecting tail shake vibrations and possible sensors to be used therefore, it is referred to US 5 816 533 A, US 5 895 012 A, EP 1 547 919 B1, and US 6 279 704 B1 as well as US 7 461 819 B2. All these documents are incorporated herein by reference.

In preferred embodiments of the method, a controlled vibration damping of the corresponding modes of the airframe is performed or a controlled generation of forces and torques or roll moments for compensation of the vibrations is performed.

In vibration compensation, excited vibrations are controlled by subsequent countersignals. In vibration damping, a feedback of the vibration velocity signals is performed, especially in a PID controller. If necessary, one can distribute this to several modes of the airframe.

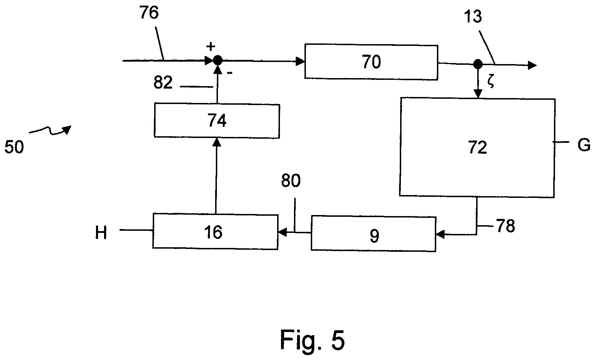

Fig. 5 shows an example embodiment of the apparatus 50 as block diagram for illustrating the overall structure of the control which is configured for a tail shake damping.

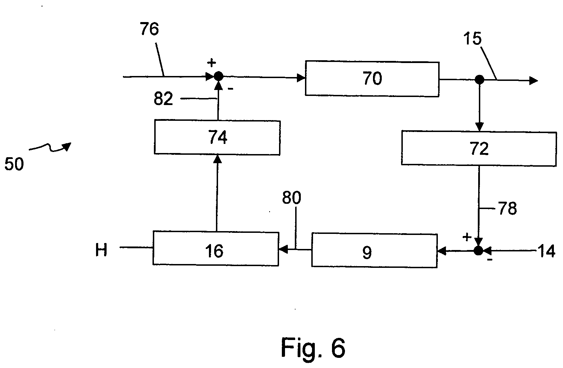

Fig. 6 shows a further embodiment of the apparatus 50 in form of a block diagram for illustrating a structure of a controller which is configured for tail shake compensation.

In both Fig. 5 and 6, the dynamic airframe system 70, a signal processing 72, a controller 9 (example for the calculating unit 54), an actuating means 16, and the rotor system 74 are depicted as blocks.

The dynamic airframe system 70 is excited by a tail shake excitation 76. The error signal sensors 8 detect, in the damping feedback system according to Fig. 5, the vibration amplitudes 13 of the affected airframe modes, while, in the compensation system of Fig. 6, tail shake indicators 15 report an imminent excitation of the dynamic airframe system 70 by the tail shake excitation 76. The output signals 15 are processed in the signal processing 72 and are input to the controller 9 which controls the at least one actuating means 16 by means of command signals 80. The actuation means 16 acts on the rotor system 74 and results in a rotor response 82 which counteracts the tail shake excitation 76.

In the damping system according to Fig. 5, the signal processing 72 performs an integration and a derivation of the vibration amplitude and the vibration signals of the affected modes of the airframe , respectively. The controller 9 is configured, for example as PID controller, which acts via the actuating means 16 as damper of the vibrations.

In the compensation system according to Fig. 6, the output signals 78 are processed by the signal processing 72. An indicated tail shake phenomenon is - after comparison with a reference input variable 14 - for example a maximum allowable tail shake oscillation level -input to the controller 9.

Hence, in tail shake damping, one uses feedback control by feeding back the vibration velocity signals to a PID controller and, if necessary, distributed over several modes of the airframe , while in the vibration compensation, one uses compensatory forces and compensation torques or roll moments generated with the excitation frequency for counteracting the tail shake excitation, for example with the aid of a disturbance rejection controller.

For further details of a disturbance rejection controller, it is referred to Jingqing Han: "From PID to Active Disturbance Rejection Control", IEEE Transactions on Industrial Electronics, Volume 56, Nr. 3, March 2009" and the references as indicated therein. This document is incorporated herein by reference.

As acting variable or correcting variable, especially the following can be used:
1) a controlled, cyclically acting rotor brake 66 as indicated in Fig. 2; and/or
2) an electric motor of the rotor in an electric-driven or hybrid-driven helicopter 20.

Additionally, the following can be used:
3) an active flap control 60 as indicated in Fig. 3 and/or
4) further active rotor control systems such as an active twisting as schematically depicted in Fig. 4.

The controlled, cyclically acting brake 66 of Fig. 2 is one example for a main rotor rotational speed influencing means 58. The rotor brake 66 can act on basis of friction or on basis of eddy currents. Preferably, the rotor brake 66 functions in a periodical manner with the Eigen frequency of the relevant modes of the airframe (especially for damping) or with the excitation frequency (especially for compensation).

A means affecting the control of an electric motor used for driving the rotor is a further example for the main rotor rotational speed influencing means 58. A similar effect as with the rotor brake 66 can be achieved here by torque modulation.

A further actuation means could be a cyclically controlled tail fin rudder.
Active flap controls 60 have been proposed repeatedly for reducing sound and vibration. The active flap control 60 comprises small servo-flaps 10 - as specific embodiment of a flap 10 - at the trailing edge 68 of a main rotor blade 32. Such servo-flaps 10 are not critical for flight safety due to their limited control authority, even in case of a total failure of such servo-flaps. The servo-flaps 10 can introduce forces 11 and torques or roll moments 12 over a large frequency range into the helicopter airframe , as this is indicated in Fig. 3, so as to dampen or compensate lateral vibrations or oscillations.

Fig. 4 shows an example for further active rotor control systems, wherein a rotor blade twisting means 64 is shown here configured to twist the main rotor blades 32 activated by actors (not shown). Thus, an active twist of rotor blades is achievable. Such a rotor blade twisting means 64 is similar to the active flap control 60 with regard to physical function and effect.

Apparatuses 50 as explained before with reference to exemplary embodiments can be used to defeat tail shake vibrations. Corresponding methods are explained below.

### Tail shake damping:

The output signals 78 of the error signal sensors 8, such as signals indicating accelerations, vibration or oscillating speeds, mast torque and tail boom strains, indicate the airframe vibrations - vibration amplitudes 13 -. Such output signals 78 are filtered - especially by the apparatus 50 as illustrated in Fig. 5 - in view of the airframe relevance. Eigen frequencies which are relevant for tail shake phenomena are processed by the controller 9 configured as PID controller as proportional signal, time integrated signal and time derivative signal and transmitted to the selected actuation means 16. For example the rotor brake 66, the electric motor, the active flap control 60 or the actively controllable blade twist initiated by the rotor blade twisting means 64, or in addition or as alternative, a rudder of a tail fin 36 can be used as actuating means 16. In this way, the tail shake airframe vibrations are dampened in a classical approach.

### Active tail shake compensation:

The typical tail shake excitation frequency is filtered from the signals describing a tail shake excitation - i.e. output signals 78 which are monitored as tail shake indicators such as output signals of the sensors 8 and 53, for example signals indicating accelerations, vibration speeds, mast torque, tail boom strains and downstream turbulence parameters. It is especially referred to US 5 816 533 which is incorporated here by reference. The control can be conducted best by a suitable rotor response.

### Tail shake compensation by suitable rotor response:

The processed output signals 78 are input to the controller 9 preferably comprising a notch filter, in an embodiment of the apparatus 50 as illustrated in Fig. 6. The controller 9 compares such signals with a maximum allowable tail shake vibration level as reference input variable 14 and generates a rotor response via the selected actuated means 16 wherein the rotor response reduces the tail shake accelerations 7 by means of counter-forces 11 and/or counter-roll moments or counter-torques 12 in the same frequency range. The rotor brake 66, the electric motor, the active flap control 60 or the blade twisting, for example by means of the rotor blade twisting means 64, or possibly (for example in addition to at least one of the actuating elements listed before) a tail fin rudder 36 can be selected as actuating means 16.

### Tail shake reduction/avoidance by influencing the rotor hub downstream flow:

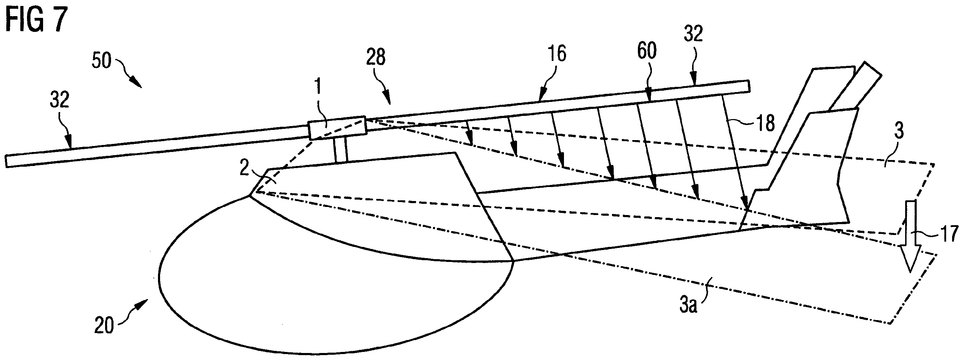

Fig. 7 shows in a schematic manner a further possibility to reduce/avoid vibration by direct influence on the wake of rotor hub and mast/engine cowling 2. For example, the wake 2 is shifted by the actuating means 16 acting on the main rotor 28 by a local changing, deflecting or redirection of the rotor downwash 18 by the active flap control 60 or the active twist 64.

According to one embodiment, the structure of the controller is the same as the structure shown in Fig. 6. According to a further embodiment, the controller 9 can also be a simple version such as a controller functioning according to the flip-flop principle.

The output signals 78 are processed and filtered in view of the excitation frequency and are compared with the reference input variable 14 and are used to control the actuating means 16 by the controller 9. As actuating means 16, preferably, the active flap control 60 or the rotor blade twisting means 64 is selected. The controller generates a blade pitch oscillation, preferably but not exclusively at the double rotor rotational frequency (2-Ω-control) by means of command signals 80. This leads by proper phasing to a shift 17 of the wake 3 of rotor hub and mast/engine cowling 2 by locally changing, deflecting or redirecting 18 the wake of rotor hub and mast/engine cowling (from 3 to 3a) so that its impact location - i.e. the location of the impact of the wake at the tail area - or the spectral or spatial structure of the wake is changed in view of a smaller excitation of the sensitive modes of the airframe.

### Summary:

An apparatus (50) and a method for reducing, eliminating or avoiding lateral vibration of a helicopter (20), namely tail shake vibration, is proposed wherein a controller (9) structure uses a main rotor rotation speed influencing means (58) or a main rotor rotation speed influencing means (58) and an active flap control (60) and/or a rotor blade twisting means (64) as actuating member (16).

### List of Reference Signs:

1 rotor hub
2 rotor mast and engine cowling
3 wake of rotor hub and mast and/or engine cowling
3a shifted wake structure
4 vertical tail fin or stabilizer
5 end plates
6 tail rotor
7 transversal/lateral vibration
8 error signal sensor (e.g. acceleration or vibration speed sensor)
9 controller (e.g. control calculating unit, especially PID controller, disturbance rejection controller [notch filter] or simple version working according to the flip flop principle)
10 (servo) flap
11 flap induced fuselage transversal forces
12 flap induced fuselage torques or roll moments
13 vibration or oscillation amplitudes (of the affected modes of the airframe)
14 reference input variable (e.g. maximum allowable tail shake level)
15 tail shake indicator (e.g. accelerations, vibration speeds, mast moment or mast torque, tail boom strain, and/or downstream turbulence parameter)
16 actuating means (e.g. rotor bake, electric motor, tail fin rudder, and/or active flap control or active blade twisting)
17 shift of the wake of rotor hub and mast/engine cowling
18 rotor downwash
20 helicopter
22 fuselage / airframe
24 cockpit and cabin area
26 tail boom
28 main rotor
30 rotor mast
32 main rotor blade
34 engine (e.g. internal combustion engine and/or electric motor)
36 rudder of a vertical tail fin
38 elevator
50 apparatus
51 vibration and/or vibration potential detection means
52 vibration detection means
53 means to detect the risk of tail shake excitation (to detect the vibration potential)
54 calculating unit
56 sensor (e.g. for detecting turbulence parameter in the wake 3)
58 main rotor rotation speed influencing means
60 active flap control
64 rotor blade twisting means
66 rotor brake
68 trailing edge
70 dynamic airframe system
72 signal processing
74 rotor system
76 tail shake excitation
78 output signal (for example a detection signal indicative of a parameter indicating either an excited vibration or a risk that a vibration may be excited)
80 command signal
82 rotor response
A structural excitation
B rotor rotation
C brake disc
D cyclic braking with Eigen frequency of the airframe or with the excitation frequency
E braking moment or braking torque
F braking shoes or eddy current brake elements
G signal processing, integration and derivation of ζ
H active flap or twist control, or rotor brake, electric drive motor, or tail fin rudder

## Claims

1. Apparatus for reducing or eliminating tail shake in form of a lateral vibration of a helicopter (20) generated on the structure of the helicopter (20) by the wake of a main rotor hub (1), and a mast and/or engine cowling (2) interacting with a tail structure of the helicopter (20), comprising:
a tail shake detection means (52) for detecting at least one parameter indicative of an excited tail shake and for generating a detection signal (78) representative of said parameter,
a calculating unit (54) configured to generate a command signal (80) on basis of the detection signal (78) wherein the command signal (80) is configured to counteract the tail shake by actuating at least one actuating means (16), and the at least one actuating means (16) controllable by the command signal (80),
**characterized in that** the at least one actuating means (16) is a main rotor rotation speed influencing means (58) for changing the rotation speed of the main rotor (28).

2. Apparatus (50) according to claim 1,
**characterized in that**
the main rotor rotation speed influencing means (58) comprises a rotor brake (66) controllable by the command signal (80) and configured to brake, preferably in a cyclically functioning manner, the main rotor (28) or a motor control controllable by the command signal (80) and configured to affect, preferably in a cyclic functioning manner, a rotation speed or a torque of an electric motor, driving the main rotor at least as auxiliary main rotor drive.

3. Apparatus (50) according to any of the preceding claims,
**characterized in that** the calculating unit (54) is configured to generate the control signal in order to counteract the tail shake by actuating the at least one actuation means so that the tail shake is dampened, compensated or avoided.

4. Apparatus (50) according to any of the preceding claims,
**characterized in that**
the calculating unit (54) is configured to generate counter-force, counter-roll moment and/or counter-torque command signals controlling the actuating means (16) for generating a counter-force, a counter-roll moment and/or a counter-torque counteracting the tail shake.

5. Apparatus (50) according to any of the preceding claims,
**characterized in that**
the calculating unit (54) is configured to generate flow influencing command signals controlling the actuating means (16) for affecting a determined influence to the wake (3) of the main rotor hub (1) and the rotor mast and/or engine cowling (2) impacting the tail area in order to reduce or eliminate excitation of vibration.

6. Apparatus (50) according to claim 5,
**characterized in that**
the calculating unit (54) is configured to generate the flow influencing command signals such that the wake (3) of the rotor hub (1) and the rotor mast and/or engine cowling (2) is deflected or redirected at least locally.

7. Helicopter (20) comprising a main rotor (28), a tail area (26) and an apparatus (50) according to any of the preceding claims for reducing, eliminating or avoiding lateral vibration of the tail area.

8. Method for reducing, eliminating or avoiding tail shake in form of a lateral vibration of a helicopter (20) in the single-digit Hertz regime generated on the structure of the helicopter (20) by the wake (3) of a rotor hub (1) and a rotor mast and/or engine cowling (2) interacting with a tail structure of the helicopter (20), comprising the steps of:
a) detecting at least an excited tail shake;
b) generating a command signal (80) on basis of the the detected tail shake, wherein the command signal (80) is configured to control an actuating means (16) in order to counteract the tail shake,
**characterized by**
c1) influencing or changing the rotation speed of the main rotor (28) by means of the command signal (80); by
c1a) actuating a rotor brake (66) for a cyclical braking of the main rotor (28) and/or
c1b) cyclically affecting, influencing or changing a rotation speed of a main rotor drive, especially by an electric motor.

9. Method according to claim 8,
**characterized in that** step b) comprises:
b1) generating a counter-force command signal, a counter-roll moment command signal and/or a counter-torque command signal (80) for generating counter-force, counter-roll moment and/or counter-torque counter-acting the tail shake for damping or compensating said tail shake and/or
b2) generating flow influencing command signals (80) for influencing the wake (3) of the main rotor hub (1) and the rotor mast and/or engine cowling (2) interfering with the tail area (26) so as to reduce or avoid a stimulation of oscillatory movements of the tail area (26).

10. Method according to claim 9,
**characterized in that** step b2) comprises:
generating the flow influencing command signals (80) such that the wake (3) of the main rotor hub (1) and the rotor mast and/or engine cowling (2) is at least locally deflected.

## Patentansprüche

1. Vorrichtung zum Verringern oder Beseitigen von Tail-Shake in Form von seitlichen Schwingungen eines Helikopters (20), die an der Struktur des Helikopters (20) durch die Nachlaufströmung einer Hauptrotornabe (1) und einer Mast- und/oder Triebwerkverkleidung (2) entstehen, die mit einer Heckstruktur des Helikopters (20) wechselwirken, umfassend:
eine Tail-Shake-Detektoreinrichtung (52) zum Detektieren von wenigstens einem Parameter, der auf angeregte Tail-Shake-Schwingungen hinweist, und zum Erzeugen eines Detektionssignals (78), das für den Parameter repräsentativ ist,
eine Recheneinheit (54), die konfiguriert ist für die Erzeugung eines Befehlssignals (80) basierend auf dem Detektionssignal (78), wobei das Befehlssignal konfiguriert ist für die Behebung des Tail-Shake durch die Aktivierung von wenigstens einer Betätigungseinrichtung (16) und wobei die wenigstens eine Betätigungseinrichtung (16) durch das Befehlssignal (80) steuerbar ist,
**dadurch gekennzeichnet, dass** die wenigstens eine Betätigungseinrichtung (16) eine Einrichtung (58) zum Beeinflussen der Drehgeschwindigkeit des Hauptrotors zum Ändern der Drehgeschwindigkeit des Hauptrotors (28) ist.

2. Vorrichtung (50) nach Anspruch 1,
**dadurch gekennzeichnet, dass** die Einrichtung (58) zum Beeinflussen der Drehgeschwindigkeit des Hauptrotors eine Rotorbremse (66) umfasst, die durch das Befehlssignal (80) steuerbar ist und konfiguriert ist zum Bremsen des Hauptrotors (28) vorzugsweise in einer zyklischen Betriebsweise, oder eine Motorsteuerung, die durch das Befehlssignal (80) steuerbar ist und konfiguriert ist für die Beeinflussung einer Drehzahl oder eines Drehmoments eines Elektromotors, der den Hauptrotor zumindest als Hilfsantrieb des Hauptrotors antreibt, vorzugsweise in einer zyklischen Betriebsweise.

3. Vorrichtung (50) nach einem der vorhergehenden Ansprüche,
**dadurch gekennzeichnet, dass** die Recheneinheit (54) konfiguriert ist für die Erzeugung des Steuersignals, um dem Tail-Shake entgegenzuwirken, indem die wenigstens eine Betätigungseinrichtung aktiviert wird, so dass der Tail-Shake gedämpft, kompensiert oder vermieden wird.

4. Vorrichtung (50) nach einem der vorhergehenden Ansprüche,
**dadurch gekennzeichnet, dass** die Recheneinheit (54) konfiguriert ist für die Erzeugung von Gegenkraft-, Gegenrollmoment- und/oder Gegendrehmoment-Befehlssignalen, die die Betätigungseinrichtung (16) steuern, um eine dem Tail-Shake entgegenwirkende Gegenkraft, ein dem Tail-Shake entgegenwirkendes Gegenrollmoment und/oder Gegendrehmoment zu erzeugen.

5. Vorrichtung (50) nach einem der vorhergehenden Ansprüche, **dadurch gekennzeichnet, dass** die Recheneinheit (54) konfiguriert ist für die Erzeugung von Strömungsbeeinflussungs-Befehlssignalen, die die Betätigungseinrichtung (16) steuern, so dass ein bestimmter Einfluss auf die Nachlaufströmung (3) der Hauptrotornabe (1) und der Rotormast-und/oder Triebwerkverkleidung (2) ausgeübt wird, die sich auf den Heckbereich auswirkt, um eine Anregung von Schwingungen zu verringern oder zu beseitigen.

6. Vorrichtung (50) nach Anspruch 5,
**dadurch gekennzeichnet, dass** die Recheneinheit (54) konfiguriert ist für die Erzeugung der Strömungsbeeinflussungs-Befehissignale, so dass die Nachlaufströmung (3) der Rotomabe (1) und der Rotormast- und/oder Triebwerkverkleidung (2) zumindest stellenweise abgelenkt und/oder umgelenkt wird.

7. Helikopter (20), umfassend einen Hauptrotor (28), einen Heckbereich (26) und eine Vorrichtung (50) zum Verringern, Beseitigen oder Vermeiden von seitlichen Schwingungen des Heckbereichs gemäß einem der vorhergehenden Ansprüche.

8. Verfahren zum Verringern, Beseitigen oder Vermeiden von Tail-Shake in Form von seitlichen Schwingungen eines Helikopters (20) im einstelligen Hertz-Bereich, die an einer Struktur des Helikopters (20) durch Nachlaufströmungen (3) der Rotornabe (1) und der Rotormast- und/oder Triebwerkverkleidung (2) entstehen, die mit einer Heckstruktur des Helikopters (20) wechselwirken, wobei das Verfahren die folgenden Schritte umfasst:
a) das Detektieren von mindestens einem angeregten Tail-Shake;
b) das Erzeugen eines Befehlssignals (80) basierend auf dem detektierten Tail-Shake, wobei das Befehlssignal (80) konfiguriert ist für die Steuerung einer Betätigungseinrichtung (16), um dem Tail-Shake entgegenzuwirken,
**dadurch gekennzeichnet** durch
c1) das Beeinflussen oder Ändern der Drehgeschwindigkeit des Hauptrotors (28) mittels des Befehlssignals (80), indem
c1a) die Rotorbremse (66) für ein zyklisches Bremsen des Hauptrotors (28) betätigt wird, und/oder durch
c1 b) ein zyklisches Beeinträchtigen, Beeinflussen oder Ändern einer Drehzahl eines Hauptrotorantriebs, insbesondere durch einen Elektromotor.

9. Verfahren nach Anspruch 8,
**dadurch gekennzeichnet, dass** Schritt b) umfasst:
b1) das Erzeugen eines Gegenkraft-Befehlssignals, eines Gegenrollmoment-Befehlssignals und/oder eines Gegendrehmoment-Befehlssignals (80) zum Erzeugen einer Gegenkraft, eines Gegenrollmoments und/oder eines Gegendrehmoments, die dem Tail-Shake entgegenwirken, um den Tail-Shake zu dämpfen oder zu kompensieren, und/oder
b2) das Erzeugen von Strömungsbeeinflussungs-Befehlssignalen (80) zum Beeinflussen der Nachlaufströmung (3) der Hauprotornabe (1) und der Rotormast- und/oder Triebwerkverkleidung (2), die den Heckbereich (26) beeinträchtigen, um eine Anregung von oszillierenden Bewegungen des Heckbereichs (26) zu verringern oder zu vermeiden.

10. Verfahren nach Anspruch 9,
**dadurch gekennzeichnet, dass** Schritt b2) umfasst:
das Erzeugen der Strömungsbeeinflussungs-Befehissignale (80), so dass die Nachlaufströmung (3) der Rotorhauptnabe (1) und der Rotormast- und/oder Triebwerkverkleidung (2) zumindest stellenweise abgelenkt wird.

## Revendications

1. Appareil pour réduire ou éliminer un tremblement de queue sous la forme d'une vibration latérale d'un hélicoptère (20) générée sur la structure de l'hélicoptère (20) par le sillage d'un moyeu de rotor principal (1), et d'un capot de mât et/ou de moteur (2) interagissant avec une structure de queue de l'hélicoptère (20), comprenant :
un moyen de détection de tremblement de queue (52) pour détecter au moins un paramètre indicatif d'un tremblement de queue excitée et pour générer un signal de détection (78) représentatif dudit paramètre,
une unité de calcul (54) configurée pour générer un signal de commande (80) sur la base du signal de détection (78) dans lequel le signal de commande (80) est configuré pour contrer le tremblement de queue en actionnant au moins un moyen d'actionnement (16), et ledit au moins un moyen d'actionnement (16) pouvant être commandé par le signal de commande (80),
**caractérisé en ce que** ledit au moins un moyen d'actionnement (16) est un moyen d'influence sur la vitesse de rotation de rotor principal (58) pour changer la vitesse de rotation du rotor principal (28).

2. Appareil (50) selon la revendication 1,
**caractérisé en ce que** le moyen d'influence sur la vitesse de rotation du rotor principal (58) comprend un frein de rotor (66) pouvant être commandé par le signal de commande (80) et configuré pour freiner, de préférence d'une manière fonctionnant cycliquement, le rotor principal (28) ou une commande de moteur pouvant être commandée par le signal de commande (80) et configurée pour affecter, de préférence d'une manière fonctionnant cycliquement, une vitesse de rotation ou un couple d'un moteur électrique, entraînant le rotor principal au moins comme entraînement de rotor principal auxiliaire.

3. Appareil (50) selon l'une quelconque des revendications précédentes, **caractérisé en ce que** l'unité de calcul (54) est configurée pour générer le signal de commande afin de contrer le tremblement de queue en actionnant ledit au moins un moyen d'actionnement de telle sorte que le tremblement de queue est amorti, compensé ou évité.

4. Appareil (50) selon l'une quelconque des revendications précédentes, **caractérisé en ce que**
l'unité de calcul (54) est configurée pour générer des signaux de commande de contre-force, de moment de contre-roulis et/ou de contre-couple commandant le moyen d'actionnement (16) pour générer une contre-force, un moment de contre-roulis et/ou un contre-couple contrant le tremblement de queue.

5. Appareil (50) selon l'une quelconque des revendications précédentes, **caractérisé en ce que**
l'unité de calcul (54) est configurée pour générer des signaux de commande d'influence sur l'écoulement commandant le moyen d'actionnement (16) pour affecter une influence déterminée sur le sillage (3) du moyen de rotor principal (1) et du capot de mât et/ou de moteur de rotor (2) impactant la zone de queue afin de réduire ou d'éliminer l'excitation de vibration.

6. Appareil (50) selon la revendication 5,
**caractérisé en ce que**
l'unité de calcul (54) est configurée pour générer les signaux de commande d'influence sur l'écoulement de telle sorte que le sillage (3) du moyeu de rotor (1) et du capot de mât et/ou de moteur de rotor (2) est dévié ou redirigé au moins localement.

7. Hélicoptère (20) comprenant un rotor principal (28), une zone de queue (26) et un appareil (50) selon l'une quelconque des revendications précédentes pour réduire, éliminer ou éviter une vibration latérale de la zone de queue.

8. Procédé pour réduire, éliminer ou éviter un tremblement de queue sous la forme d'une vibration latérale d'un hélicoptère (20) dans le régime Hertzien à un seul chiffre générée sur la structure de l'hélicoptère (20) par le sillage (3) d'un moyeu de rotor (1) et d'un capot de mât et/ou de moteur de rotor (2) interagissant avec une structure de queue de l'hélicoptère (20), comprenant les étapes consistant à :
a) détecter au moins un tremblement de queue excitée ;
b) générer un signal de commande (80) sur la base du tremblement de queue détecté, dans lequel le signal de commande (80) est configuré pour commander un moyen d'actionnement (16) afin de contrer le tremblement de queue,
**caractérisé par** l'étape consistant à
c1) influencer ou modifier la vitesse de rotation du rotor principal (28) au moyen du signal de commande (80) ; en
c1a) actionnant un frein de rotor (66) pour un freinage cyclique du rotor principal (28) et/ou
c1b) affectant, influençant ou modifiant de manière cyclique une vitesse de rotation d'un entraînement de rotor principal, en particulier par un moteur électrique.

9. Procédé selon la revendication 8,
**caractérisé en ce que** l'étape b) comprend :
b1) la génération d'un signal de commande de contre-force, d'un signal de commande de moment de contre-roulis et/ou d'un signal de commande de contre-couple (80) pour générer une contre-force, un moment de contre-roulis et/ou un contre-couple contrant le tremblement de queue pour amortir ou compenser ledit tremblement de queue et/ou
b2) la génération de signaux de commande d'influence sur l'écoulement (80) pour influencer le sillage (3) du moyen de rotor principal (1) et du capot de mât et/ou de moteur de rotor (2) interférant avec la zone de queue (26) de manière à réduire ou à éviter une stimulation de mouvements oscillants de la zone de queue (26).

10. Procédé selon la revendication 9,
**caractérisé en ce que** l'étape b2) comprend :
la génération des signaux de commande d'influence sur l'écoulement (80) de telle sorte que le sillage (3) du moyeu de rotor principal (1) et du capot de mât et/ou de moteur de rotor (2) est au moins localement dévié.
